# EUROPEAN PATENT SPECIFICATION

(11) **EP 2 467 776 B1**
(45) Date of publication and mention of the grant of the patent: **15.05.2019**
(21) Application number: 10750200.7
(22) Date of filing: 18.08.2010
(51) Int. Cl.: G06F 9/30, G06F 9/38

(54) **METHODS AND APPARATUS TO PREDICT NON-EXECUTION OF CONDITIONAL NON-BRANCHING INSTRUCTIONS**
VERFAHREN UND VORRICHTUNG ZUR VORHERSAGE DER NICHT-AUSFÜHRUNG VON BEDINGTEN NICHT-VERZWEIGENDEN BEFEHLEN
PROCÉDÉS ET APPAREIL POUR PRÉDIRE UNE NON-EXÉCUTION D'INSTRUCTIONS DE NON-BRANCHEMENT CONDITIONNEL

(30) Priority: 19.08.2009 US 543847
(43) Date of publication of application: 27.06.2012
(73) Proprietor: Qualcomm Incorporated, San Diego, CA 92121 (US)
(72) Inventor: STEMPEL, Brian M., San Diego California 92121 (US); DIEFFENDERFER, James N., San Diego California 92121 (US); SARTORIUS, Thomas A., San Diego California 92121 (US); MANDZAK, David J., San Diego California 92121 (US); SMITH, Rodney W., San Diego California 92121 (US)
(74) Representative: Dunlop, Hugh Christopher
(86) International application number: PCT/US2010/045910
(87) International publication number: WO 2011/022493

(56) References cited:
- WO-A1-00/41071
- WO-A1-00/41072
- WO-A1-2006/094297
- US-B1- 6 442 679
- US-B1- 6 687 812

## Description

### Field of the Disclosure

The present disclosure relates generally to the field of processors and in particular processors that support conditional non-branching instructions.

### Background

Many portable products, such as cell phones, laptop computers, personal data assistants (PDAs) and the like, utilize a processing system that executes programs, such as communication and multimedia programs. A processing system for such products may include multiple processors, complex memory systems for storing instructions and data, controllers, peripheral devices such as communication interfaces, and fixed function logic blocks configured, for example, on a single chip. At the same time, portable products have a limited energy source in the form of batteries that are often required to support high performance operations by the processing system. To increase battery life, it is desired to perform these operations as efficiently as possible. Many personal computers are also being developed with efficient designs to operate with reduced overall energy consumption.

Processors employ a pipelined architecture with an instruction set that generally includes conditional branching instructions. Programs may use the conditional branching instructions to control the flow of program operations. However, the execution of conditional branch instructions may cause a bubble in the pipeline pending resolution of the associated branch condition which is generally not determined until deep in the pipeline of the processor. Many processors also include conditional non-branching instructions to help alleviate the performance robbing properties of the conditional branch instructions. Conditional execution of non-branching instructions allows a programmer to specify whether an instruction is to execute or not execute based upon a machine state generated previously. The use of conditional non-branch instructions helps to reduce the need for conditional branch instructions and thereby improve performance. WO 00/41071 A1 describes a method and apparatus for determining a predicted predicate value for a predicate. A predicated instruction is then conditionally executed depending on the predicted predicate value. US 6442679 B1 describes a guard apparatus for predicting guard outcomes for predicated instructions, each of which specifies a guard operator to be applied to a guard source to generate the guard outcome.

When a conditional instruction's associated condition is evaluated and indicates the instruction is not to be executed, resources associated with the conditional instruction may have already been consumed. For example, register operands required for the conditional non-branch instruction to execute may have already been fetched. Also, the conditional non-branch instruction may have unnecessarily introduced pipeline dependencies in the processor pipeline. For example, a conditional instruction may stall in the pipeline while waiting for its condition to resolve, thereby causing the stall to ripple to all instructions that are dependent upon the conditional instruction's execution. Further, conditional instructions may exist in a software loop, with their condition-resolving properties occurring in a similar fashion for every iteration of the loop, which may cause significant performance degradation.

### SUMMARY

Among its several aspects, the present disclosure recognizes that providing more efficient methods and apparatuses for predicting non-execution of conditional non-branch instructions can improve performance and reduce power requirements in a processor system. To such ends, an embodiment of the invention addresses a method for not executing an issued conditional non-branch instruction. A conditional non-branch instruction is identified as being eligible for a prediction, the prediction indicating that the eligible conditional non-branch (ECNB) instruction would not execute. The ECNB instruction is executed as a no operation (NOP) instruction in response to the prediction that the ECNB instruction would not execute.

Another embodiment addresses an apparatus for predicting a conditional non-branch instruction would not execute. The apparatus having a first circuit for identifying a conditional non-branch instruction as being eligible for a prediction. The apparatus having a second circuit for predicting whether or not the eligible conditional non-branch (ECNB) instruction would not execute in response to meeting an evaluation criterion.

Another embodiment addresses a method for predicting a conditional non-branch instruction would not execute. A conditional non-branch instruction is identified that is eligible for predicting whether it will execute or not execute. The eligible conditional non-branch (ECNB) instruction is predicted that it will not execute in response to meeting an evaluation criterion.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the scope of the present invention. Accordingly, the drawings and detailed description are to be regarded as illustrative in nature and not as restrictive.

### BRIEF DESCRIPTION OF THE DRAWINGS

Various aspects of the present invention are illustrated by way of example, and not by way of limitation, in the accompanying drawings, wherein:
FIG. 1 illustrates a wireless communication system;
FIG. 2 shows an exemplary processor system that predicts whether to execute or not execute conditional non-branch instructions;
FIG. 3 illustrates an exemplary eligible conditional non-branch (ECNB) instruction prediction circuit;
FIG. 4A illustrates a first process for predicting execution of an ECNB instruction;
FIG. 4B illustrates a second process for predicting execution of an ECNB instruction;
FIG. 5 illustrates a third process for predicting execution of an ECNB instruction; and
FIG. 6 illustrates a fourth process for predicting execution of an ECNB instruction.

### DETAILED DESCRIPTION

The detailed description set forth below in connection with the appended drawings is intended as a description of various exemplary embodiments of the present invention and is not intended to represent the only embodiments in which the present invention may be practiced. The detailed description includes specific details for the purpose of providing a thorough understanding of the present invention. However, it will be apparent to those skilled in the art that the present invention may be practiced without these specific details. In some instances, well known structures and components are shown in block diagram form in order to avoid obscuring the concepts of the present invention.

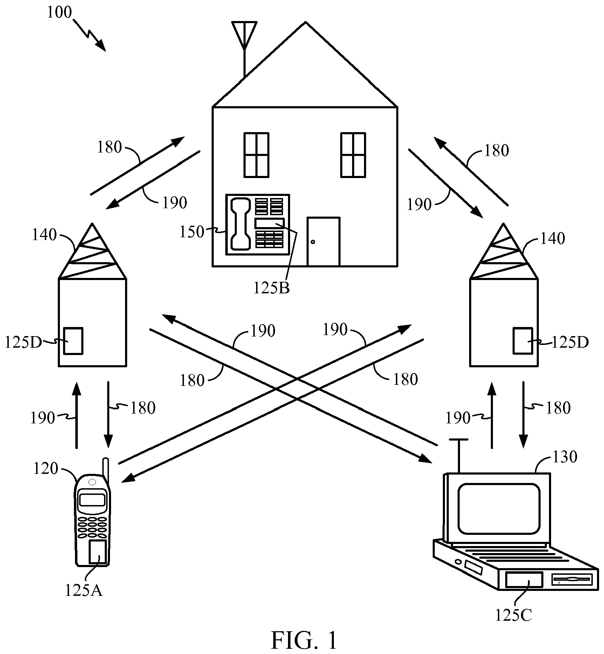

FIG. 1 illustrates an exemplary wireless communication system 100 in which an embodiment of the invention may be advantageously employed. For purposes of illustration, FIG. 1 shows three remote units 120, 130, and 150 and two base stations 140. It will be recognized that common wireless communication systems may have many more remote units and base stations. Remote units 120, 130, 150, and base stations 140 which include hardware components, software components, or both as represented by components 125A, 125C, 125B, and 125D, respectively, have been adapted to embody the invention as discussed further below. FIG. 1 shows forward link signals 180 from the base stations 140 to the remote units 120, 130, and 150 and reverse link signals 190 from the remote units 120, 130, and 150 to the base stations 140.

In FIG. 1, remote unit 120 is shown as a mobile telephone, remote unit 130 is shown as a portable computer, and remote unit 150 is shown as a fixed location remote unit in a wireless local loop system. By way of example, the remote units may alternatively be cell phones, pagers, walkie talkies, handheld personal communication system (PCS) units, portable data units such as personal data assistants, or fixed location data units such as meter reading equipment. Although FIG. 1 illustrates remote units according to the teachings of the disclosure, the disclosure is not limited to these exemplary illustrated units. Embodiments of the invention may be suitably employed in a processor having conditional non-branching instructions.

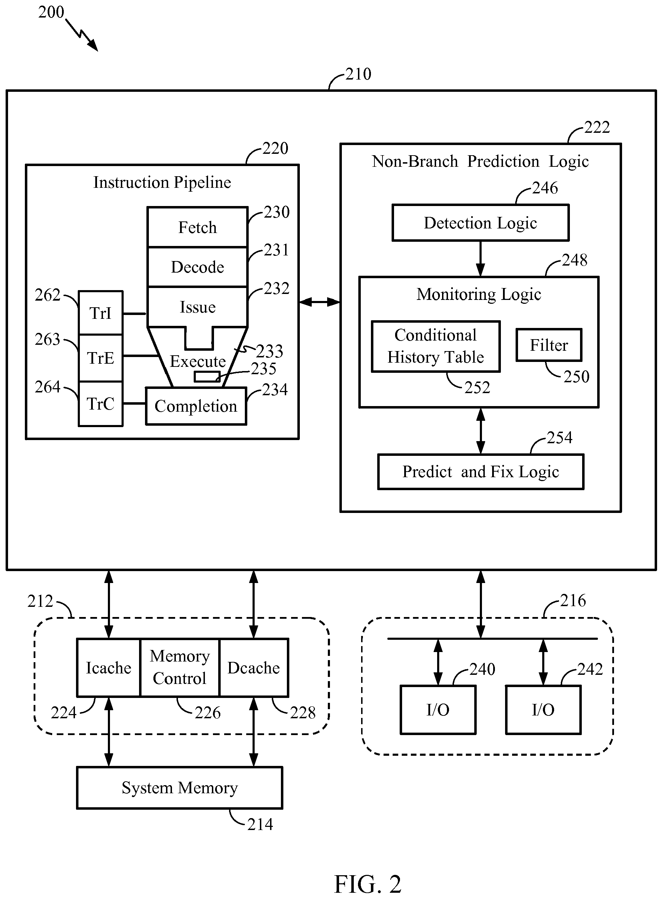

FIG. 2 shows an exemplary processor system 200 that predicts whether to execute or not execute conditional non-branch instructions. The processor system 200 includes a processor 210, a cache system 212, a system memory 214, and an input and output (I/O) system 216. The processor 210 comprises, for example, an instruction pipeline 220 and a conditional non-branch prediction logic circuit 222. The cache system 212, for example, comprises an instruction cache (Icache) 224, a memory controller 226, and a data cache (Dcache) 228. System memory 214 provides access for instructions and data that are not found in the Icache 224 or Dcache 228. It is noted that the cache system 212 may be integrated with processor 210 and may further include multiple levels of caches in a hierarchical organization. The I/O system 216 comprises a plurality of I/O devices, such as I/O devices 240 and 242, which interface with the processor 210.

The instruction pipeline 220 is made up of a series of stages, such as, a fetch stage 230, decode stage 231, issue stage 232, execute stage 233, and completion stage 234. Those skilled in the art will recognize that each stage 230-234 in the instruction pipeline 220 may comprise a number of additional pipeline stages, for example, depending upon the processor's operating frequency and complexity of operations required in each stage. Also, the execute stage may be made up of one or more instruction execution stage circuits, such as an adder, a multiplier, logic operations, shift and rotate operations, and the like. Such instruction execution stage circuits may be associated with conditional non-branch instructions. Each of the pipeline stages may have varied implementations without departing from the conditional prediction methods and apparatus described herein.

The fetch stage 230 fetches instructions for execution from the instruction cache (Icache) 224 according to a computer program flow that may include conditional branch instructions and conditional non-branching instructions. Generally, a fetched conditional branch instruction uses branch prediction logic to predict whether the conditional branch will be taken. A fetched non-branch instruction that is not a conditional non-branch instruction proceeds to the decode stage 231 to be decoded, issued for execution in the issue stage 232, executed in execute stage 233, and retired in completion stage 234. A fetched conditional non-branch instruction utilizes the conditional non-branch prediction logic circuit 222 as described herein to determine whether the instruction should not be executed. A conditional non-branch instruction that is not executed does not change the processor state as it existed before encountering the conditional non-branch instruction.

The conditional non-branch prediction logic circuit 222 comprises a detection logic circuit 246, a monitoring logic circuit 248 having a filter 250 and a conditional history table 252, and a predict and fix logic circuit 254. In one embodiment, it is assumed that a majority of conditional non-branch instructions generally have their conditions resolved to the same value for most iterations of a software loop.

The detection logic circuit 246, as a software loop detector that operates based on the dynamic characteristics of conditional branch instructions used in software loops. In software loops with a single entry and a single exit, a loop ending branch is generally a conditional branch instruction which branches back to the start of the software loop for all iterations of the loop except for the last iteration, which exits the software loop. The detection logic circuit 246 may have multiple embodiments for the detection of software loops as described in more detail below and in U.S. Patent Application, 11/066,508 assigned to the assignee of the present application, entitled "Suppressing Update of a Branch History Register by Loop-Ending Branches".

According to one example, every conditional branch instruction with a branch target address less than the conditional branch instruction address, and thus considered a backwards branch, is assumed to be a loop ending branch instruction. This requires an address comparison when the branch target address is determined. Since not all backward branches are loop ending branches, there is some level of inaccuracy which may need to be accounted for.

In another example, a loop ending branch may be detected in simple loops by recognizing repeated execution of the same branch instruction. By storing the program counter value for the last backward branch instruction in a special purpose register, and comparing this stored value with the instruction address of the next backward branch instruction, a loop ending branch may be recognized when the two instruction addresses match. Since code may include conditional branch instructions within a software loop, the determination of the loop ending branch instruction may become more complicated. In such a situation, multiple special purpose registers may be instantiated in hardware to store the instruction addresses of each conditional branch instruction. By comparing against all of the stored values, a match may be determined for the loop ending branch.

A loop ending branch may also be statically marked by a compiler or assembler. For example, a compiler generates a particular type of branch instruction, by use of a unique opcode or by setting a special format bit field, that is only used for loop ending branches. Upon decoding the particular branch instruction, the loop ending branch is determined.

The monitoring logic circuit 248 comprises a filter 250, a conditional history table (CHT) 252, and associated monitoring logic. In one embodiment, a monitoring process saves state information of pre-specified condition events which may have occurred in one or more prior executions of a software loop having a conditional non-branch instruction that is eligible for prediction. In one embodiment, all of the conditional non-branch instructions may not be eligible for prediction. For example, conditional non-branch instructions implemented with microcode, for reasons of implementation complexity, may not be eligible for predicted execution operation. Also, conditional branch instructions would not be eligible for conditional non-branch instruction prediction, since the branch instructions generally have their own prediction hardware and methods which operate differently than the prediction techniques described herein.

Historical information is used to predict when an eligible conditional non-branch (ECNB) instruction will not execute. As described in more detail below, approaches are used to determine with high confidence whether an ECNB instruction will or will not execute. Approaches to determine high confidence prediction methods are advantageous since the penalty for predicting an ECNB instruction to not execute when it should be executed is more severe than predicting an ECNB instruction to execute when it should not be executed. For example, an ECNB instruction that is predicted to not execute would change pipeline operations associated with the ECNB instruction to minimize power and or improve performance by not performing selected ECNB operations that would not be required when the ECNB instruction is predicted to not execute. For example, a memory operand specified by a conditional load instruction would not need to be fetched if the conditional load instruction was predicted to not execute. For such an ECNB instruction predicted to not execute, the pipeline would be changed at the appropriate pipeline stage, for example, to not fetch any register or memory operands required for the execution of the instruction, in order to reduce power and improve performance. However, if the condition specified by the predicted ECNB instruction indicates an incorrect prediction, the pipeline must be flushed at least to the point in the fetched code where the effects due to the incorrect prediction may be corrected. An ECNB instruction that is predicted to execute when it should not be executed does not require a pipeline flush, but rather, for the case of an incorrect prediction, terminates the instruction such that processor state is not affected.

A condition evaluation process evaluates the saved state information of the pre-specified condition events and upon meeting a pre-specified evaluation criterion, enables prediction of a present eligible conditional non-branch (ECNB) instruction for its next execution in the loop. For example, a pre-specified condition event may include a pre-specified number of times a software loop is to be executed and whether one or more previous ECNB instructions executed or did not execute based on the state of the associated condition. For example, pre-specified evaluation criteria may include meeting a set number of iterations of a software loop and having a prior status of not executing a previous ECNB instruction encountered in the previous set number of loop iterations. For example, the pre-specified evaluation criterion may require not executing previous ECNB instructions encountered in two previous executions of the software loop. In such a case, the present ECNB instruction would be predicted to be not executed in the next iteration of the software loop.

In support of such a monitoring logic circuit 248, the filter 250 determines whether a fetched conditional non-branch instruction is eligible for predicted execution. If a fetched instruction is not eligible for predicted execution, the fetched instruction is executed as specified by the processor's architecture without the aid of prediction information. If a fetched instruction is eligible for predicted execution, the CHT 252 is enabled. An entry in the CHT 252, associated with an ECNB instruction, is selected to provide prediction information to prediction logic that is part of the predict and fix logic circuit 254. Such prediction information is tracked, for example, by the pipeline stages 232-234 as the ECNB instruction moves through the pipeline.

The CHT 252 entry records the history of execution for the fetched instruction eligible for predicted execution. For example, each CHT entry may comprise a combination of count values from execution status counters and status bits that are inputs to the prediction logic. The CHT 252 may also comprise index logic to allow a fetched ECNB instruction to index into an entry in the CHT 252 associated with the fetched ECNB instruction, since multiple ECNB instructions may exist in a software loop. For example, by counting the number of ECNB instructions since the top of a software loop, the count may be used as an index into the CHT 252. The monitoring logic circuit 248 includes loop counters for counting iterations of software loops and ensuring that execution status counters have had the opportunity to saturate at a specified count value that represents, for example, a strongly not-executed status. If an execution status counter has saturated, the prediction logic is enabled to make a prediction for not executing the associated fetched conditional non-branch instruction on the next iteration of the loop.

The predict and fix logic 254 generates prediction information that is tracked at the issue stage 232, the execute stage 233, and the completion stage 234 in track register issue (TrI) 262, track register execute (TrE) 263, and track register complete (TrC) 264. For example, in predicting no execution of the ECNB instruction, the ECNB instruction is effectively treated, for example, as a no operation (NOP) instruction in the pipeline stages 232-234. By treating the ECNB instruction as a NOP, general purpose registers (GPRs), if required when an ECNB instruction is executed, are not read, since they are not required for executing a predicted NOP instruction. If the ECNB instruction was a load or store memory access instruction, the memory access operation is not initiated as a predicted NOP instruction. For example, an operand fetch circuit 235 operating in the execute stage 233 would not fetch an operand required for the ECNB instruction to execute in response to a prediction to not execute. By not reading the GPRs or accessing memory, power may be reduced in the processor 210. Also, processor performance may be improved by not reading the GPRs or accessing memory and unnecessarily waiting for operands that would not be required when the ECNB instruction is predicted as a NOP.

Upon reaching the execute stage 233, if the execute condition specified for the ECNB instruction has evaluated opposite to its prediction, the pipeline execution of the predicted NOP instruction is corrected. For example, a correction to the pipeline may include flushing the instructions in the pipeline beginning at the stage the prediction was made. In an alternative embodiment, the pipeline may be flushed from the beginning fetch stage where the ECNB instruction was initially fetched. Also, the appropriate CHT entry may also be corrected after an incorrect prediction.

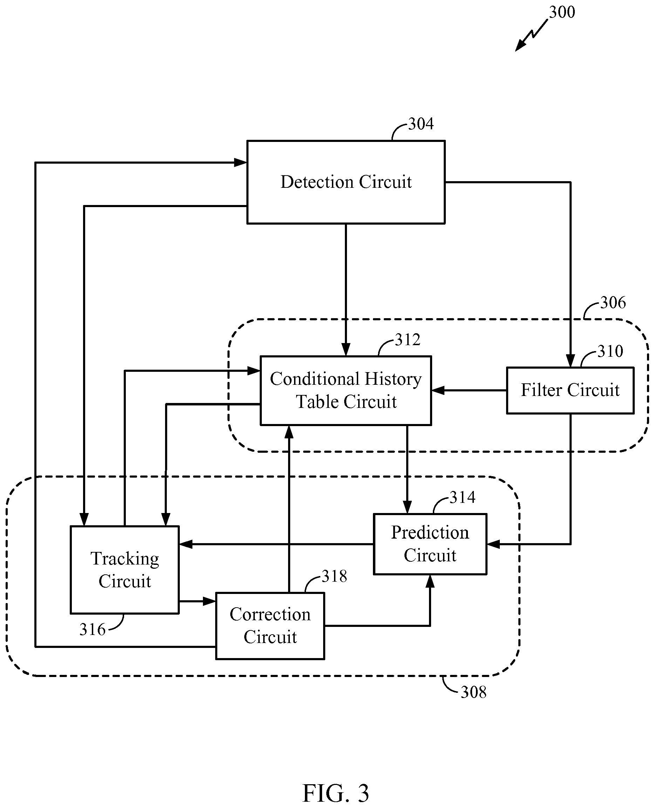

FIG. 3 illustrates an exemplary eligible conditional non-branch (ECNB) instruction prediction circuit 300. The ECNB prediction circuit 300 illustrates circuits and control signal paths between circuits. In more detail, the ECNB instruction prediction circuit 300 includes a detection circuit 304, monitor circuit 306, and a predict and fix circuit 308. The monitor circuit 306 comprises a filter circuit 310 and a conditional history table (CHT) circuit 312. The predict and fix circuit 308 comprises a prediction circuit 314, a tracking circuit 316, and a correction circuit 318.

The detection circuit 304, acting as a loop detector, operates to detect a loop ending branch as discussed above with regard to the detection logic circuit 246. For example, a loop ending branch is generally a conditional branch instruction which branches back to the start of the loop for all iterations of the loop except for the last iteration which exits the loop. Information concerning each identified loop is passed to filter circuit 310.

In one embodiment, the filter circuit, for example, is a loop counter which provides an indication that a set number of iterations of a software loop has occurred, such as three iterations of a particular loop. For each iteration of the loop, the filter determines if a conditional non-branch instruction is eligible for prediction. If an eligible conditional non-branch (ECNB) instruction is in the loop, the status of executing the ECNB instruction is recorded in the conditional history table (CHT) circuit 312. For example, an execution status counter may be used to record an execution history of previous attempted executions of an ECNB instruction. An execution status counter may be updated in a one direction to indicate a ECNB instruction conditionally executed and in an opposite direction to indicate an ECNB instruction conditionally did not execute. For example, a two bit execution status counter may be used where a not-executed status causes a decrement of the counter and an executed status causes an increment of the counter. Output states of the execution status counter are, for example, assigned a "11" output to indicate that previous ECNB instructions are strongly indicated to have been executed, a "10" output to indicate that previous ECNB instructions are weakly indicated to have been executed, a "01" output to indicate that previous ECNB instructions are weakly indicated to have been not executed, and a "00" output indicates that previous ECNB instructions are strongly indicated to have been not executed. The execution status counter "11" output and "00" output would be saturated output values. An execution status counter would be associated with or provide status for each ECNB instruction in a detected software loop. However, a particular implementation may limit the number of execution status counters that are used in the implementation and thus limit the number of ECNB instructions that may be predicted. The detection circuit 304 generally resets the execution status counters upon the first entry into a software loop.

Alternatively, a disable prediction flag may be associated with each ECNB instruction to be predicted rather than an execution status counter. The disable prediction flag is set active to disable prediction if an associated ECNB instruction has previously been determined to have executed. Having a previous ECNB instruction that executed implies that the confidence level for predicting a not execute situation for the ECNB instruction would be lower than may be acceptable.

An index counter may also be used with the CHT 312 to determine which ECNB instruction is being counted or evaluated in the software loop. For example, in a loop having five or more ECNB instructions, the first ECNB instruction could have an index of "000" and the fourth eligible non-branch instruction could have an index of "011". The index represents an address into the CHT 312 to access the stored execution status counter values for the corresponding ECNB instruction.

The prediction circuit 314 receives the prediction information for an ECNB instruction, such as execution status counter output values, and predicts, during the decode stage 231 of FIG. 2, for example, that the ECNB instruction will not execute. In an alternate embodiment, the prediction circuit 314 may predict that the condition specified by the ECNB instruction evaluates to a no execute state. The prediction circuit 314 passes the prediction decision to the tracking circuit 316, which may include the associated ECNB instruction being predicted and corresponding CHT entry contents. If an ECNB instruction is not predicted, the prediction information indicated regular execution. If an ECNB instruction was predicted to execute as a NOP instruction, then tracking information informs correction circuit 318 as to the status of execution and associated condition evaluation to determine if an incorrect prediction was made. If an incorrect prediction was made, the correction circuit 318 flushes the pipeline, updates the appropriate execution status counters in the CHT 312, and in one embodiment marks the associated CHT entry to indicate that this particular ECNB instruction is not to be predicted from this point on. In another embodiment, the correction circuit 318 may also change the pre-specified evaluation criterion upon determining the ECNB instruction was mispredicted, for example, to make the prediction criterion more conservative from this point on.

It is recognized that a sequence of eligible conditional non-branch (ECNB) instructions in a loop may be coded such that each instruction depends upon the same condition resolution. In such a case, the sequence of ECNB instructions may be treated as a group with a single entry in a conditional history table (CHT). In such a case, when the prediction indicates no execution, the sequence of ECNB instructions is treated as a sequence of no operation (NOP) instructions. For example, a group of ECNB instructions may include two conditional load operand instructions followed by a conditional arithmetic instruction which specifies an operation on the two loaded operands. In addition, the three ECNB instructions depend on the same condition resolution. In a pipeline processor, these three instructions may be identified early in the pipeline as a conditional group having the same condition resolution. In one embodiment, the first conditional load instruction of the group in the pipeline triggers a prediction evaluation and an entry in the CHT may be marked as associated with this group of ECNB instructions. In this manner, the group of ECNB instructions is associated with a single index into the CHT, such that all instructions of an ECNB group evaluate to the same index.

It is recognized that eligible conditional non-branch (ECNB) instructions may be recognized outside of loops and may also be advantageously predicted to not execute. The detection circuit 304, acting as an address range detection circuit, detects an address range where ECNB instruction prediction is to be evaluated. Whenever code is fetched that enters the address range, the ECNB instruction prediction circuit 300 is enabled and ECNB instructions within the address range are monitored and evaluated. When an evaluation criterion is met, the ECNB instruction is predicted to execute or not execute with tracking and correction operating in a similar manner to that previously described.

It is further recognized that not all loops or address ranges have similar characteristics. If a particular loop or address range provides poor prediction results, that loop or address range may be marked to disable prediction. In a similar manner, a particular loop or address range may operate with good prediction under one set of operating scenarios and may operate with poor prediction under a different set of operating scenarios. In such a case, recognition of the operating scenarios allows prediction to be enabled, disabled or enabled but with different evaluation criterion appropriate for the operating scenario.

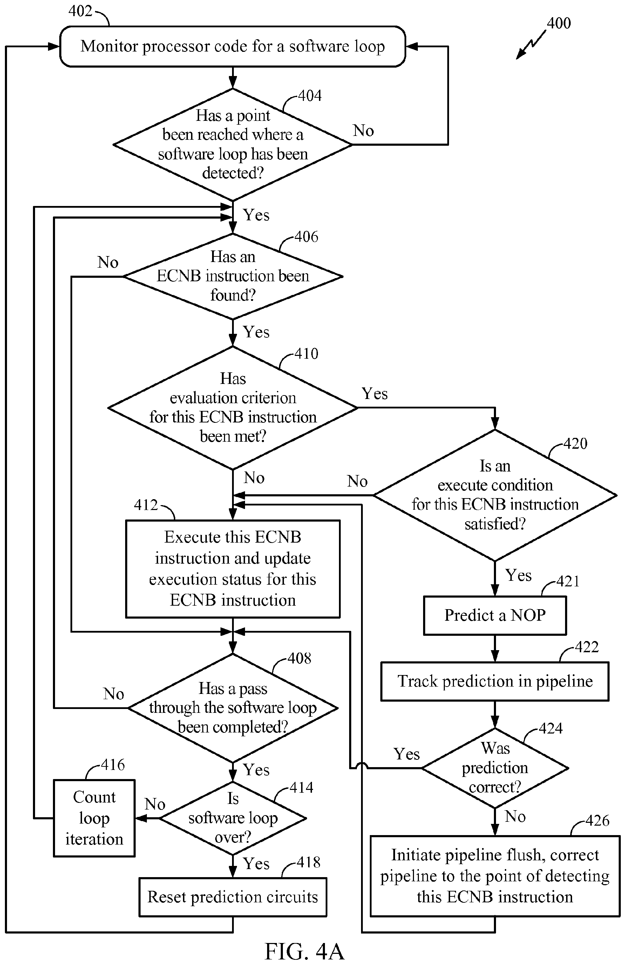

FIG. 4A illustrates a first process 400 for predicting execution of an ECNB instruction. At block 402, processor code execution is monitored for a software loop. At decision block 404, a determination is made whether a point in the code has been reached where a software loop has been detected. A software loop may be determined, for example, by identifying a backward branch to a start of a loop, as described above. If no software loop has been identified, the first process 400 returns to block 402. If a software loop has been identified then, at this point in the code, a first cycle of the software loop has already been executed and the next cycle of the software loop may be ready to start.

In the next cycle of the software loop at decision block 406, a determination is made whether an ECNB instruction has been detected, for example, during a pipeline decode stage, such as decode stage 231 of FIG. 2. If no ECNB instruction has been detected, the process 400 proceeds to decision block 408. At decision block 408, a determination is made whether a pass through the software loop has been completed. A first pass through the software loop may be determined, for example, by reaching the backward branch that identified the software loop at decision block 404. If a pass through the software loop has not been completed, the first process 400 returns to decision block 406 to continue checking for an ECNB instruction. At decision block 406, if an ECNB instruction has been detected, the first process 400 proceeds to decision block 410. At decision block 410, a determination is made, during processor decode stage 231, for example, whether a pre-specified evaluation criterion for this ECNB instruction has been met. The pre-specified evaluation criterion may be, for example, whether a loop iteration count is greater than or equal to a pre-specified value, such as three. If the pre-specified evaluation criterion has not been met, the first process 400 proceeds to block 412. At block 412, this ECNB instruction is executed and an execution status is updated for this ECNB instruction. For example, a disable prediction flag is set if the ECNB instruction conditionally executed. A disable prediction flag once set may not be reset, for example, until the software loop is completed.

At decision block 408, a determination is made whether a pass through the software loop has been completed. If a pass through the software loop has been completed, the first process 400 proceeds to decision block 414. At decision block 414, a determination is made whether the software loop is over. If the software loop is not finished, the first process 400 proceeds to block 416. At block 416, the loop iteration is counted and the first process 400 returns to decision block 406 to keep checking for ECNB instructions. If the software loop is finished, the first process 400 proceeds to block 418. At block 418, the prediction circuits used in first process 400 are reset. Such a reset allows the prediction evaluation to begin with reinitialized circuits each time a software loop is entered. Alternatively, the reset could occur whenever a new software loop is detected. The first process 400 then returns to block 402 to begin searching for the next software loop.

Returning to decision block 410, if the pre-specified criterion has been met, the first process 400 proceeds to decision block 420. At decision block 420, a determination is made as to whether an execute condition for this ECNB instruction is satisfied. For example, an execution condition may take the form of a disable prediction flag for this ECNB instruction. A disable prediction flag would generally be set whenever an instance of the ECNB instruction conditionally executes. Such a disable prediction flag once set may not be reset, for example, until the software loop is completed. Returning to decision block 420, if the disable prediction flag is in the disable prediction state indicating that the ECNB instruction has ever previously executed, the first process 400 returns to block 412. If the disable prediction flag is in the enable prediction state indicating that the ECNB instruction previously has not executed, the first process 400 proceeds to block 421. At block 421, this ECNB instruction is predicted to execute as a NOP instruction. At block 422, the prediction is tracked in the processor pipeline. At decision block 424 a determination is made, at the pipeline stage where the condition associated with this ECNB instruction is determined, whether the prediction of block 420 was correct. If the prediction was correct, the process 400 returns to block 408 since further ECNB instructions may need to be evaluated in the software loop. If the prediction was incorrect, the first process 400 proceeds to block 426. At block 426, a flush of the processor pipeline is initiated to remove the incorrectly predicted ECNB instruction and any instruction in the pipeline that may have been affected by the predicted operation. At block 426, the pipeline is corrected to the point of detecting this ECNB instruction. The process 400 then returns to block 412, where this ECNB instruction may then be executed and its associated execution status updated.

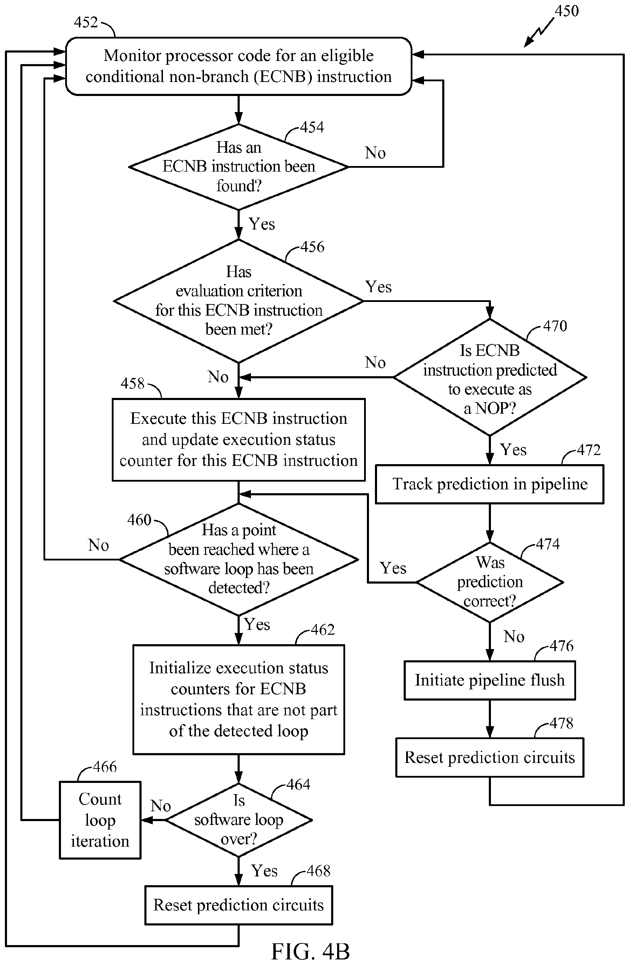

FIG. 4B illustrates a second process 450 for predicting execution of an ECNB instruction. At block 452, processor code execution is monitored for an ECNB instruction. At decision block 454, a determination is made whether an ECNB instruction has been detected, for example, during a pipeline decode stage, such as decode stage 231 of FIG. 2. If no ECNB instruction has been detected, the second process 450 returns to block 452. If an ECNB instruction has been detected, the second process 450 proceeds to decision block 456. At decision block 456, a determination is made, during processor decode stage 231, for example, whether a pre-specified evaluation criterion for this ECNB instruction has been met. The pre-specified evaluation criterion may be, for example, whether a loop iteration count associated with the ECNB instruction is greater than or equal to a pre-specified value, such as three. If the pre-specified evaluation criterion has not been met, the second process 450 proceeds to block 458. At block 458, this ECNB instruction is executed and an execution status counter is updated for this ECNB instruction.

At decision block 460, a determination is made whether a software loop has been detected. A software loop may be determined, for example, by identifying a backward branch in the code, as described above. If a software loop was not detected, the second process 450 returns to block 452 to check for another ECNB instruction. If a software loop was detected, the second process 450 proceeds to block 462. At block 462, the execution status counters for ECNB instructions that are not part of the detected loop are initialized, since in the second process 450, only ECNB instructions in a software loop are predicted. Fig. 4B covers an expected case where a loop is detected in a code sequence having other ECNB instructions outside of the loop. The other ECNB instructions outside of the loop affect the CHT capacity and could limit the number of ECNB instructions evaluated in the detected loop. Thus, the execution status counters of the encountered ECNB instructions outside the loop are reinitialized and the CHT logic is adjusted as described in further detail below.

ECNB instructions that are not part of the detected software loop may be determined from the addresses of the ECNB instructions and the address range of the software loop. The starting entry of a conditional history table (CHT) is adjusted to represent the ECNB instructions detected in the software loop. It is also noted that the execution status counters for ECNB instructions that are not part of the detected loop may be reallocated to the CHT to increase the CHT's capacity for ECNB instructions within the software loop. At decision block 464, a determination is made whether the software loop is over. If the software loop is not finished, the second process 450 proceeds to block 466. At block 466, the loop iteration is counted and the process returns to block 452. If the software loop is finished, the second process 450 proceeds to block 468. At block 468, the prediction circuits used in first process 400 are reset. Such reset, allows, each time a software loop is entered, the prediction evaluation to begin with reinitialized circuits. Alternatively, the reset could occur whenever a new software loop is detected.

Returning to decision block 456, if the pre-specified criterion has been met, the second process 450 proceeds to decision block 470. At decision block 470, a determination is made whether to execute this ECNB instruction as a no operation (NOP) instruction. For example, this ECNB instruction may be predicted to execute the function specified by the ECNB instruction. In such case, the second process 450 proceeds to block 458. Alternatively, this ECNB instruction may be predicted to execute as a NOP instruction. At block 472, the prediction is tracked in the processor pipeline. At decision block 474, a determination is made, at the pipeline stage where the condition associated with this ECNB instruction is determined, whether the prediction of block 470 was correct. If the prediction was correct, the second process 450 returns to block 460. If the prediction was incorrect, the second process 450 proceeds to block 476. At block 476, a flush of the processor pipeline is initiated to remove the incorrectly predicted ECNB instruction and any instruction in the pipeline that may have been affected by the predicted operation. At block 478, the prediction circuits used in the second process 450 are reset, due to finding an incorrect prediction in the software loop being evaluated. The second process 450 then returns to block 452. Alternatively, a correction could be made to the ECNB instruction status counters to reflect the incorrect prediction and the process may continue.

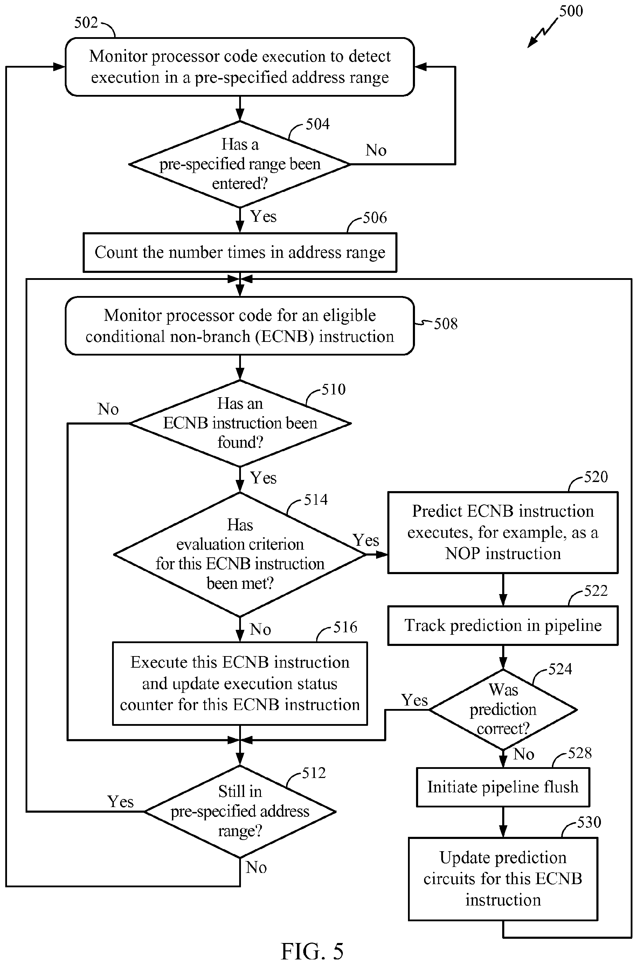

FIG. 5 illustrates a third process 500 for predicting execution of an ECNB instruction. At block 502, processor code execution is monitored to determine if the processor is executing code fetched from a pre-specified address range. For example, a compiler or other software tool may identify ECNB instructions in a section of code and use the addresses of the identified ECNB instructions to generalize a pre-specified address range. At decision block 504, a determination is made whether the pre-specified address range has been detected, for example, during a pipeline fetch stage, such as fetch stage 230 of FIG. 2. If no pre-specified address range has been detected, the third process 500 returns to block 502. If the pre-specified address range has been detected, the third process 500 proceeds to block 506. At block 506, an address range counter is updated to indicate the number of times a particular address range has been entered. At block 508, processor code is monitored for an ECNB instruction. At decision block 510, a determination is made whether an ECNB instruction has been detected, for example, during a pipeline decode stage, such as decode stage 231 of FIG. 2. If no ECNB instruction has been detected, the third process 500 proceeds to decision block 512. At decision block 512, a determination is made whether the processor is still executing code in the pre-specified address range. If the processor is not executing code in the pre-specified address range, the third process 500 proceeds to block 502. If the processor is executing code in the pre-specified address range, the third process 500 proceeds to block 508.

Returning to decision block 510, if an ECNB instruction has been detected, the third process 500 proceeds to decision block 514. At decision block 514, a determination is made, during processor decode stage 231 of FIG. 2, for example, whether a pre-specified evaluation criterion for this ECNB instruction has been met. A pre-specified evaluation criteria is chosen to provide a high level of confidence for predicting the ECNB instruction executes as a NOP. For example, in one embodiment, the pre-specified evaluation criterion may be set up to require that at least two previous attempted executions of the ECNB instruction have a strongly not executed status. If the pre-specified evaluation criterion has not been met, the third process 500 proceeds to block 516. At block 516, this ECNB instruction is executed and an execution status counter is updated for this ECNB instruction. The third process 500 then returns to decision block 512, to determine whether the processor is still executing code in the pre-specified address range and returns to block 508 if the determination is positive and returns to block 502 otherwise.

Returning to decision block 514, if the pre-specified evaluation criterion has been met, the third process 500 proceeds to block 520. At block 520, execution of this ECNB instruction is predicted to execute as a NOP instruction. At block 522, the prediction is tracked in the processor pipeline. At decision block 524 a determination is made, at the pipeline stage where the condition associated with this ECNB instruction is determined, whether the prediction of block 520 was correct. If the prediction was correct, the third process 500 returns to decision block 512 to determine whether the processor is still executing code in the pre-specified address range and returns to block 508 if the determination is positive and returns to block 502 otherwise.

Returning to decision block 524, if the prediction was incorrect, the third process 500 proceeds to block 528. At block 528, a flush of the processor pipeline is initiated to remove the incorrectly predicted ECNB instruction and any instruction in the pipeline that may have been affected by the predicted operation. At block 530, the prediction circuits for this ECNB instruction are updated. The process 500 then returns to block 508.

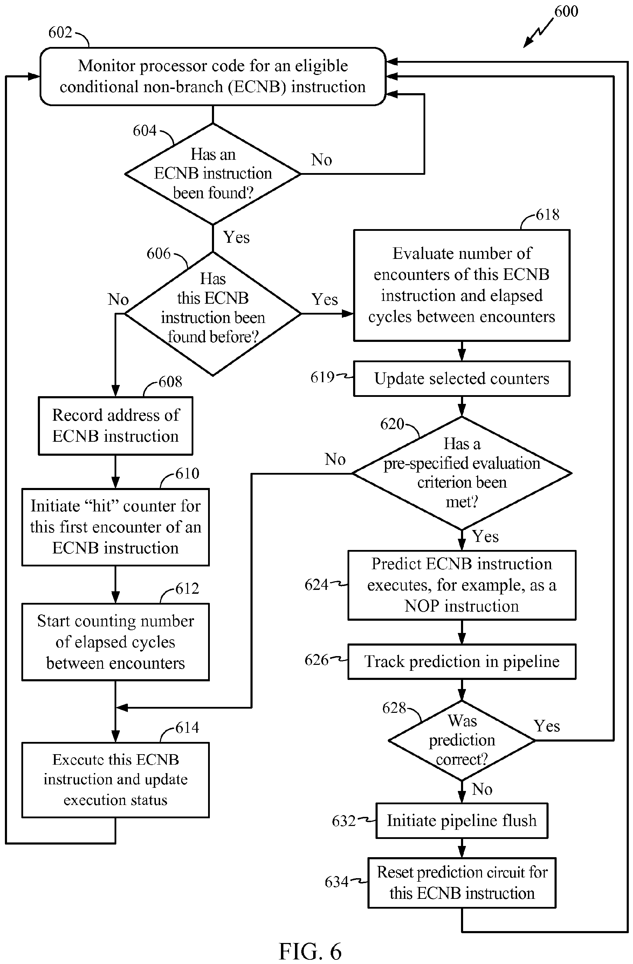

FIG. 6 illustrates a fourth process 600 for predicting execution of an ECNB instruction. The fourth process 600 evaluates whether an ECNB instruction is repeatedly identified as having a relatively short or a relatively long period of processor cycles between identification of the same ECNB instruction. A relatively short period of processor cycles may be indicative that the ECNB instruction is located in a software loop. A relatively long period of processor cycles may be indicative that the ECNB instruction is located within an address range that may be executed primarily due to a called routine, such as when a user downloads a video for display. In such a case, an MPEG decoding routine, having an ECNB instruction, may be called.

At block 602, processor code execution is monitored for an ECNB instruction. At decision block 604, a determination is made whether an ECNB instruction has been detected, for example, during a pipeline decode stage, such as decode stage 231 of FIG. 2. If no ECNB instruction has been detected, the fourth process 600 returns to block 602. If an ECNB instruction has been detected, the fourth process 600 proceeds to decision block 606. At decision block 606, a determination is made whether this ECNB instruction has been identified before. If this is the first time this ECNB instruction has been identified, the fourth process 600 proceeds to block 608. At block 608, the address of this ECNB instruction is recorded. At block 610, a "hit" counter is initiated to, for example, a count of one. At block 612, an elapsed cycle counter is started to count the number of elapsed cycles between encounters of this ECNB instruction. It is noted that the number of cycles counted may have to be filtered to account for interrupt routines and direct memory access operations to the extent that the cycles associated with these other operations affects the accuracy of the count for its intended purpose. At block 614, this ECNB instruction is executed and an execution status counter is updated. The fourth process 600 then returns to block 602.

Returning to decision block 606, if this ECNB instruction has been previously identified, then the fourth process 600 proceeds to block 618. At block 618, the number of times this ECNB instruction has been encountered and the number of elapsed cycles between encounters are evaluated. At block 619, the "hit" counter is updated, the present elapsed cycle count is stored, and the elapsed cycle counter is restarted to count the number of cycles which elapse in the next period between encounters. At decision block 620, a determination is made whether a pre-specified evaluation criterion is evaluated. In one embodiment, the pre-specified evaluation criterion may be set up to require that at least two previous attempted executions have strongly not executed status in an execution status counter with less than X processor cycles between the two encounters. In another embodiment, the pre-specified evaluation criterion may be set up to require at least three previous attempted executions, each having strongly not executed status in the execution status counter, with at least Y processor cycles between each of the three encounters, where Y is greater than X. If the pre-specified evaluation criterion is not met, the fourth process 600 returns to block 614 where this ECNB instruction is executed and the execution status counter is updated. The process then proceeds back to block 602.

Returning to decision block 620, if the pre-specified evaluation criterion is met, the fourth process 600 proceeds to block 624. At block 624, the execution of this ECNB instruction is predicted; for example, this ECNB instruction is predicted to execute as a NOP instruction. At block 626, the prediction is tracked in the processor pipeline. At decision block 628, a determination is made, at the pipeline stage where the condition associated with this ECNB instruction is determined, whether the prediction of block 624 was correct. If the prediction was correct, the fourth process 600 returns to block 602. If the prediction was not correct, the fourth process 600 proceeds to block 632. At block 632, a flush of the processor pipeline is initiated to remove the incorrectly predicted ECNB instruction and any instruction in the pipeline that may have been affected by the predicted operation. At block 634, the prediction circuit used for this ECNB instruction is reset. The process 600 then returns to block 602.

The various illustrative logical blocks, modules, circuits, elements, or components described in connection with the embodiments disclosed herein may be implemented or performed with a general purpose processor, a digital signal processor (DSP), an application specific integrated circuit (ASIC), a field programmable gate array (FPGA) or other programmable logic components, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing components, for example, a combination of a DSP and a microprocessor, a plurality of microprocessors, one or more microprocessors in conjunction with a DSP core, or any other such configuration appropriate for a desired application.

The methods described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor.

The processor 210, for example, may be configured to execute instructions including conditional non-branch instructions under control of a program stored on a computer readable storage medium either directly associated locally with the processor, such as may be available through an instruction cache, or accessible through an I/O device, such as one of the I/O devices 240 or 242, for example. The I/O device also may access data residing in a memory device either directly associated locally with the processors, such as the Dcache 228, or accessible from another processor's memory. The computer readable storage medium may include random access memory (RAM), dynamic random access memory (DRAM), synchronous dynamic random access memory (SDRAM), flash memory, read only memory (ROM), programmable read only memory (PROM), erasable programmable read only memory (EPROM), electrically erasable programmable read only memory (EEPROM), compact disk (CD), digital video disk (DVD), other types of removable disks, or any other suitable storage medium.

While the invention is disclosed in the context of illustrative embodiments for use in processor systems, it will be recognized that a wide variety of implementations may be employed by persons of ordinary skill in the art consistent with the above discussion and the claims which follow below. For example, a fixed function implementation may also utilize various embodiments of the present invention.

## Claims

1. A method for handling a conditional non-branch instruction comprising:
identifying (406, 454, 510, 604) a conditional non-branch instruction, CNB, as being eligible for a prediction;
predicting , in response to satisfying an evaluation criterion (410, 456,510), whether or not the eligible CNB instruction would execute, wherein the prediction evaluation criterion corresponds to a strongly not executed status;
executing the eligible CNB instruction as a no operation, NOP, instruction (420, 520) in response to a prediction that the eligible CNB instruction would not execute, alternatively, executing the eligible CNB instruction normally in response to a prediction that the eligible CNB instruction would execute; and
recording in a conditional history table (252, 312) whether the eligible CNB instruction did or did not execute and predicting that the next eligible CNB instruction does not execute in response to the conditional history table indicating at least one prior attempted execution of the eligible CNB instruction did not execute,
**characterised in that** the at least one prior attempted execution of the eligible CNB instruction was encountered in a software loop, in a pre-specified address range or within an identified number of processor cycles.

2. The method of claim 1, wherein:
a source operand required for the eligible CNB instruction to execute is not fetched in response to the prediction that the eligible CNB instruction would not execute; or
a register in a general purpose register file is not reserved to contain the result of the eligible CNB instruction in response to the prediction that the eligible CNB instruction would not execute.

3. The method of claim 1, further comprising:
predicting that the eligible CNB instruction does not execute in response to a disable prediction flag that indicates no prior successful executions of the eligible CNB instruction occurred during an eligible period on which the prediction was based.

4. The method of claim 1, further comprising:
comparing (410, 456, 514, 620) the evaluation criterion with a count value output of an eligible CNB instruction execution status counter to generate the prediction, wherein the eligible CNB instruction execution status counter saturates at a first count value indicative of a history of prior attempted executions of the eligible CNB instruction being strongly not executed.

5. The method of claim 4, further comprising:
updating the eligible CNB instruction execution status counter in a first direction to indicate a prior attempted execution of the eligible CNB instruction conditionally executed; and
updating the eligible CNB instruction execution status counter in a second direction that is opposite to the first direction to indicate a prior attempted execution of the eligible CNB instruction conditionally did not execute.

6. The method of claim 4, wherein the evaluation criterion is the first count value.

7. An instruction pipeline (220) apparatus comprising:
means (250, 310) for identifying a conditional non-branch instruction as being eligible for a prediction;
means (254, 314) for predicting whether or not the eligible conditional non-branch, eligible CNB, instruction would execute, wherein the prediction evaluation criterion corresponds to a strongly not executed status as recorded in a conditional history table (252, 312); and
means (233) for executing the eligible CNB instruction as a no operation, NOP, instruction in response to a prediction that the eligible CNB instruction would not execute, or for executing the eligible CNB instruction normally in response to a prediction that the eligible CNB instruction would execute;
**characterised by** a means for predicting that the next eligible CNB instruction does not execute in response to the conditional history table indicating at least one prior attempted execution of the eligible CNB instruction did not execute, when the at least one prior attempted execution of the eligible CNB instruction was encountered in a software loop, in a pre-specified address range or within an identified number of processor cycles.

8. The apparatus of claim 7, wherein:
said means for identifying comprises a first circuit for identifying the conditional non-branch instruction as being eligible for a prediction; and
said means for predicting comprises a second circuit for predicting whether or not the eligible CNB instruction would execute in response to meeting the evaluation criterion.

9. The apparatus of claim 8, further comprising:
an operand fetch circuit configured not to fetch an operand required for the eligible CNB instruction to execute in response to the prediction to not execute.

10. The apparatus of claim 8, further comprising:
a pipeline tracking circuit configured to track prediction information in pipeline stages following a pipeline stage for predicting; and
an eligible CNB instruction execution stage circuit configured not to execute the eligible CNB instruction in response to the prediction to not execute.

11. The apparatus of claim 8, further comprising:
an eligible CNB instruction execution status counter with a count value output that is compared to the evaluation criterion;
means for updating the count value in a first direction to indicate an eligible CNB instruction conditionally executed, wherein the count value saturates at a first count value indicative of a strongly executed history; and
means for updating the count value in a second direction to indicate an eligible CNB instruction did not execute, wherein the count value saturates at a second count value indicative of a strongly not executed history.

12. The apparatus of claim 11, wherein the evaluation criterion is the second count value.

13. The apparatus of claim 8, wherein the evaluation criterion is a disable prediction flag in an non-active state, and wherein the non-active state of the disable prediction flag indicates prediction is enabled, the apparatus comprising means for setting the disable prediction flag to a disable state if the eligible CNB instruction is ever determined to have conditionally executed in a software loop associated with the eligible CNB instruction.

## Patentansprüche

1. Ein Verfahren zum Handhaben eines konditionalen Nicht-Verzweigungs- bzw. Nicht-Zweig-Befehls, das Folgendes aufweist:
Identifizieren (406, 454, 510, 604) eines bedingten bzw. konditionalen Nicht-Zweig-Befehls bzw. CNB (CNB = conditional non-branch instruction) als für eine Vorhersage geeignet;
Vorhersagen, ansprechend auf Erfüllen eines Evaluationskriteriums (410, 456, 510), ob der geeignete CNB-Befehl ausgeführt werden könnte, wobei das Vorhersageevaluationskriterium einem in hohem Maße Nicht-Ausführbar-Status entspricht;
Ausführen des geeigneten CNB-Befehls als ein Nicht-Betrieb- bzw. NOP-Befehl (NOP = no operation) (420, 520) ansprechend auf eine Vorhersage, dass der geeignete CNB-Befehl nicht ausgeführt werden könnte, alternativ normales Ausführen des geeigneten CNB-Befehls ansprechend auf eine Vorhersage, dass der geeignete CNB-Befehl ausgeführt werden könnte; und
Aufzeichnen, in einer konditionalen Historientabelle (252, 312), ob der geeignete CNB-Befehl ausgeführt wurde oder nicht und Vorhersagen, dass der nächste geeignete CNB-Befehl nicht ausgeführt wird ansprechend darauf, dass die konditionale Historientabelle anzeigt, dass wenigstens eine frühere versuchte Ausführung des geeigneten CNB-Befehls nicht ausgeführt wurde, **dadurch gekennzeichnet, dass** die wenigstens eine frühere versuchte Ausführung des geeigneten CNB-Befehls in einer Softwareschleife, in einem vorspezifizierten Adressbereich oder innerhalb einer identifizierten Anzahl von Prozessorzyklen aufgefunden wurde.

2. Verfahren nach Anspruch 1, wobei:
ein Quellenoperand, der für den geeigneten CNB-Befehl erforderlich ist um ausgeführt zu werden, nicht abgerufen wird ansprechend auf die Vorhersage, dass der geeignete CNB-Befehl nicht ausgeführt werden könnte; oder
ein Register in einer Universalregisterdatei nicht dafür reserviert ist, das Ergebnis des geeigneten CNB-Befehls zu enthalten ansprechend auf die Vorhersage, dass der geeignete CNB-Befehl nicht ausgeführt werden könnte.

3. Verfahren nach Anspruch 1, das weiter Folgendes aufweist:
Vorhersagen, dass der geeignete CNB-Befehl nicht ausgeführt wird ansprechend auf ein Vorhersage-Deaktivieren-Flag, das anzeigt, dass keine erfolgreichen Ausführungen des geeigneten CNB-Befehls während einer geeigneten Periode aufgetreten sind, auf der die Vorhersage basiert.

4. Verfahren nach Anspruch 1, das weiter Folgendes aufweist:
Vergleichen (410, 456, 514, 620) des Evaluationskriteriums mit einer Zählungswertausgabe eines Zählers eines Ausführungsstatus eines geeigneten CNB-Befehls zum Generieren der Vorhersage, wobei der Zähler des Ausführungsstatus des geeigneten CNB-Befehls bei einem ersten Zählungswert gesättigt ist, der anzeigt, dass eine Historie früherer versuchter Ausführungen des geeigneten CNB-Befehls in hohem Maße nicht ausführbar gewesen ist.

5. Verfahren nach Anspruch 4, das weiter Folgendes aufweist:
Aktualisieren des Zählers des Ausführungsstatus des geeigneten CNB-Befehls in einer ersten Richtung um anzuzeigen, dass eine frühere versuchte Ausführung des geeigneten CNB-Befehls konditional bzw. bedingt ausgeführt wurde; und
Aktualisieren des Zählers des Ausführungsstatus des geeigneten CNB-Befehls in einer zweiten Richtung, die der ersten Richtung entgegengesetzt ist, um anzuzeigen, dass eine frühere versuchte Ausführung des geeigneten CNB-Befehls konditional nicht ausgeführt wurde.

6. Verfahren nach Anspruch 4, wobei das Evaluationskriterium der erste Zählungswert ist.

7. Eine Befehlspipeline-Vorrichtung (220), die Folgendes aufweist:
Mittel (250, 310) zum Identifizieren eines konditionalen Nicht-Verzweigungs-Befehls bzw. CNB-Befehls (CNB = conditional non-branch instruction) als für eine Vorhersage geeignet;
Mittel (254, 314) zum Vorhersagen, ob der geeignete CNB-Befehl ausgeführt werden könnte oder nicht, wobei das Vorhersageevaluationskriterium einem stark Nicht-Ausführbar-Status entspricht, wie er in einer konditionalen bzw.
bedingten Historientabelle (252, 312) aufgezeichnet ist; und
Mittel (233) zum Ausführen des geeigneten CNB-Befehls als ein Nicht-Betriebs- bzw. NOP-Befehl (NOP = no operation) ansprechend auf eine Vorhersage, dass der geeignete CNB-Befehl nicht ausgeführt werden könnte,
oder zum normalen Ausführen des geeigneten CNB-Befehls ansprechend auf eine Vorhersage, dass der geeignete CNB-Befehl ausgeführt werden könnte;
**gekennzeichnet durch** Mittel zum Vorhersagen, dass der nächste geeignete CNB-Befehl nicht ausgeführt wird ansprechend darauf, dass die konditionale Historientabelle anzeigt, dass wenigstens eine frühere versuchte Ausführung des geeigneten CNB-Befehls nicht ausgeführt wurde, wenn die wenigstens eine frühere versuchte Ausführung des geeigneten CNB-Befehls in einer Softwareschleife, in einem vorspezifizierten Adressbereich oder innerhalb einer identifizierten Anzahl von Prozessorzyklen aufgefunden wurde.

8. Vorrichtung nach Anspruch 7, wobei:
die Mittel zum Identifizieren eine erste Schaltung aufweisen zum Identifizieren des konditionalen Nicht-Zweig-Befehls als für eine Vorhersage geeignet; und
die Mittel zum Vorhersagen eine zweite Schaltung aufweisen zum Vorhersagen, ob der geeignete CNB-Befehl ausgeführt werden könnte ansprechend auf Erfüllen des Evaluationskriteriums.

9. Vorrichtung nach Anspruch 8, die weiter Folgendes aufweist:
eine Operanden-Abrufschaltung, die konfiguriert ist, einen Operand nicht abzurufen, der erforderlich ist für den geeigneten CNB-Befehl um ausgeführt zu werden ansprechend auf die Vorhersage, nicht ausgeführt werden zu können.

10. Vorrichtung nach Anspruch 8, die weiter Folgendes aufweist:
eine Pipeline-Tracking- bzw. -Nachverfolgungsschaltung, die konfiguriert ist zum Nachverfolgen von Vorhersageinformation in Pipeline-Stufen nachfolgend auf eine Pipeline-Stufe zum Vorhersagen; und
eine Schaltung einer Ausführungsstufe eines geeigneten CNB-Befehls, die konfiguriert ist den geeigneten CNB-Befehl nicht auszuführen ansprechend auf die Vorhersage, nicht ausgeführt werden zu können.

11. Vorrichtung nach Anspruch 8, die weiter Folgendes aufweist:
einen Zähler eines Ausführungsstatus eines geeigneten CNB-Befehls mit einer Zählungswertausgabe, die mit dem Evaluationskriterium verglichen wird;
Mittel zum Aktualisieren des Zählungswertes in einer ersten Richtung um anzuzeigen, dass ein geeigneter CNB-Befehl konditional ausgeführt wird, wobei der Zählungswert bei einem ersten Zählungswert gesättigt ist, der eine Historie einer hohen Ausführbarkeit anzeigt; und
Mittel zum Aktualisieren des Zählungswertes in einer zweiten Richtung um anzuzeigen, dass ein geeigneter CNB-Befehl nicht ausgeführt worden ist, wobei der Zählungswert bei einem zweiten Zählungswert gesättigt ist, der eine Historie einer hohen Nicht-Ausführbarkeit anzeigt.

12. Vorrichtung nach Anspruch 11, wobei das Evaluationskriterium der zweite Zählungswert ist.

13. Vorrichtung nach Anspruch 8, wobei das Evaluationskriterium ein Vorhersage-Deaktivieren-Flag in einem nicht aktiven Zustand ist, und wobei der nicht aktive Zustand des Vorhersage-Deaktivieren-Flags anzeigt, dass die Vorhersage aktiviert ist, wobei die Vorrichtung Mittel aufweist zum Setzen des Vorhersage-Deaktivieren-Flags auf einen Deaktivierungszustand, wenn der geeignete CNB-Befehl jemals bestimmt wird, als in einer Software-Schleife, die mit dem geeigneten CNB-Befehl assoziiert ist, konditional ausgeführt worden zu sein.

## Revendications

1. Procédé de gestion d'une instruction de non-branchement conditionnel, comprenant les étapes consistant à :
identifier (406, 454, 510, 604) une instruction de non-branchement conditionnelle (CNB) comme étant éligible pour une prédiction ;
prédire, en réponse à la satisfaction d'un critère d'évaluation (410, 456, 510), si l'instruction CNB éligible s'exécuterait ou non, le critère d'évaluation de prédiction correspondant à un statut fortement non exécuté ;
exécuter l'instruction CNB éligible comme une instruction ineffective (NOP) (420, 520) en réponse à une prédiction que l'instruction CNB éligible ne s'exécuterait pas, sinon exécuter normalement l'instruction CNB éligible en réponse à une prédiction que l'instruction CNB éligible s'exécuterait ; et
enregistrer, dans une table historique conditionnelle (252, 312), si l'instruction CNB éligible s'est ou non exécutée et prédire que l'instruction CNB éligible suivante ne s'exécute pas en réponse à la table historique conditionnelle qui indique qu'au moins une tentative précédente d'exécution de l'instruction CNB éligible ne s'est pas exécutée,
**caractérisé en ce que** l'au moins une tentative précédente d'exécution de l'instruction CNB éligible a été trouvée dans une boucle logicielle, dans une plage d'adresses spécifiée au préalable ou dans un nombre identifié de cycles de traitement.

2. Procédé selon la revendication 1, dans lequel :
un opérande source requis pour que l'instruction CNB éligible s'exécute n'est pas extrait en réponse à la prédiction que l'instruction CNB éligible ne s'exécuterait pas ; ou
un registre, dans un fichier de registre polyvalent, n'est pas réservé pour contenir le résultat de l'instruction CNB éligible en réponse à la prédiction que l'instruction CNB éligible ne s'exécuterait pas.

3. Procédé selon la revendication 1, comprenant en outre l'étape consistant à :
prédire que l'instruction CNB éligible ne s'exécute pas en réponse à un indicateur de désactivation de prédiction qui indique qu'aucune exécution réussie précédente de l'instruction CNB éligible ne s'est produite pendant une période éligible sur laquelle la prédiction était basée.

4. Procédé selon la revendication 1, comprenant en outre l'étape consistant à :
comparer (410, 456, 514, 620) le critère d'évaluation à une sortie de valeur de comptage d'un compteur de statut d'exécution d'instruction CNB éligible afin de générer la prédiction, le compteur de statut d'exécution d'instruction CNB éligible se saturant à une première valeur de comptage représentative d'un historique de tentatives précédentes d'exécution de l'instruction CNB éligible n'étant fortement pas exécutées.

5. Procédé selon la revendication 4, comprenant en outre les étapes consistant à :
mettre à jour le compteur de statut d'exécution d'instruction CNB éligible dans une première direction pour indiquer qu'une tentative précédente d'exécution de l'instruction CNB éligible s'est exécutée conditionnellement ; et
mettre à jour le compteur de statut d'exécution d'instruction CNB éligible dans une seconde direction opposée à la première direction pour indiquer qu'une tentative précédente d'exécution de l'instruction CNB éligible ne s'est pas exécutée conditionnellement.

6. Procédé selon la revendication 4, dans lequel le critère d'évaluation est la première valeur de comptage.

7. Appareil pipeline d'instructions (220), comprenant :
un moyen (250, 310) permettant d'identifier d'une instruction de non-branchement conditionnelle comme étant éligible pour une prédiction ;
un moyen (254, 314) permettant de prédire si l'instruction de non-branchement conditionnelle (CNB) éligible s'exécuterait ou non, le critère d'évaluation de prédiction correspondant à un statut fortement non exécuté, comme enregistré dans une table historique conditionnelle (252, 312) ; et
un moyen (233) permettant d'exécuter l'instruction CNB éligible comme une instruction ineffective (NOP) en réponse à une prédiction que l'instruction CNB éligible ne s'exécuterait pas, ou d'exécuter normalement l'instruction CNB éligible en réponse à une prédiction que l'instruction CNB éligible s'exécuterait ;
**caractérisé par** un moyen permettant de prédire que l'instruction CNB éligible suivante ne s'exécute pas en réponse à la table historique conditionnelle qui indique qu'au moins une tentative précédente d'exécution de l'instruction CNB éligible ne s'est pas exécutée, quand l'au moins une tentative précédente d'exécution de l'instruction CNB éligible a été trouvée dans une boucle logicielle, dans une plage d'adresses spécifiée au préalable ou dans un nombre identifié de cycles de traitement.

8. Appareil selon la revendication 7, dans lequel :
ledit moyen d'identification comprenant un premier circuit permettant d'identifier l'instruction de non-branchement conditionnelle comme étant éligible pour une prédiction ; et
ledit moyen de prédiction comprend un second circuit permettant de prédire si l'instruction CNB éligible s'exécuterait ou non en réponse à la satisfaction du critère d'évaluation.

9. Appareil selon la revendication 8, comprenant en outre :
un circuit d'extraction d'opérande, configuré pour ne pas extraire d'opérande requis pour l'exécution de l'instruction CNB éligible en réponse à la prédiction de non-exécution.

10. Appareil selon la revendication 8, comprenant en outre :
un circuit de suivi de pipeline, configuré pour suivre une information de prédiction dans des étages de pipeline après un étage de pipeline de prédiction ; et
un circuit d'étage d'exécution d'instruction CNB éligible, configuré pour ne pas exécuter l'instruction CNB éligible en réponse à la prédiction de non-exécution.

11. Appareil selon la revendication 8, comprenant en outre :
un compteur de statut d'exécution d'instruction CNB éligible avec une sortie de valeur de comptage qui est comparée au critère d'évaluation ;
un moyen permettant de mettre à jour la valeur de comptage dans une première direction pour indiquer qu'une instruction CNB éligible s'est exécutée conditionnellement, la valeur de comptage saturant à une première valeur de comptage représentative d'un historique fortement exécuté ; et
un moyen permettant de mettre à jour la valeur de comptage dans une seconde direction pour indiquer qu'une instruction CNB éligible ne s'est pas exécutée, la valeur de comptage saturant à une seconde valeur de comptage représentative d'un historique fortement non exécuté.

12. Appareil selon la revendication 11, dans lequel le critère d'évaluation est la seconde valeur de comptage.

13. Appareil selon la revendication 8, dans lequel le critère d'évaluation est un indicateur de désactivation de prédiction dans un état non actif, et dans lequel l'état non actif de l'indicateur de désactivation de prédiction indique qu'une prédiction est activée, l'appareil comprenant un moyen permettant de régler l'indicateur de désactivation de prédiction vers un état de désactivation s'il est jamais déterminé que l'instruction CNB éligible s'est exécutée conditionnellement dans une boucle logicielle associée à l'instruction CNB éligible.
